# EUROPEAN PATENT SPECIFICATION

(11) **EP 3 473 901 B1**
(45) Date of publication and mention of the grant of the patent: **18.03.2020**
(21) Application number: 17197625.1
(22) Date of filing: 20.10.2017
(51) Int. Cl.: F16K 3/02, F16K 11/065

(54) **DISC ASSEMBLY**
SCHEIBENANORDNUNG
ENSEMBLE DE DISQUE

(43) Date of publication of application: 24.04.2019
(73) Proprietor: Siemens Schweiz AG, 8047 Zürich (CH)
(72) Inventor: Eggert, Dominik, 8046 Zürich (CH); Evertz, Jörg, 8903 Birmensdorf (CH); Kobler, Pius, 8037 Zürich (CH)
(74) Representative: Maier, Daniel Oliver

(56) References cited:
- EP-A1- 2 444 702

## Description

### Background

The present disclosure relates to a valve with two ceramic discs. More particularly, the present disclosure focuses on an arrangement of a pair of ceramic discs inside a housing of a valve. The present disclosure also relates to a circuit for heating, cooling, air-conditioning and / or ventilation comprising a valve with a ceramic disc.

Valves employ ceramic discs as valve elements and / or as shut-off elements. Other uses of ceramic discs inside valves include, but are not limited to, throttle elements, elements for regulation or control of gaseous flow or liquid flow, mixing or diverting elements etc. These valves commonly comprise a metallic or a polymeric housing.

The German patent application DE102008017099A1 discloses a valve element with two valve plates 3a, 3b. The valve plates 3a, 3b are arranged perpendicular to flow path through the valve. FIG 1 of DE102008017099A1 shows U-shaped valve plates 3a, 3b that may slide in opposite directions.

The German patent application DE102008017099A1 in par. 12 teaches flange inserts 9 that are made of metal or of plastics. However, DE102008017099A1 does not teach the use of ceramics in valves. The application does, in particular, not deal with difficulties with parts such as housings and throttle elements that are made of different materials.

Difficulties due to gaskets made of different materials are, however, known from various other technical fields such as wristwatches. The Japanese patent application JP19970269073 teaches a watch wherein a glass cover 203 is mounted on a packing 300. The arrangement of JP19970269073 employs a gasket 100 to obtain a wristwatch that is waterproof and dustproof.

The European patent application EP2444702A1 discloses a valve with fixed disc 21 and with a moving disc 30. The moving disc 30 can be arranged both upstream and downstream of the fixed disc 21. In accordance with par. 33, the surfaces of discs 21 and 30 abut one another in order to achieve fluid-tightness.

A fluid-tight arrangement requires the abutting surfaces of the discs 21 and 30 to be planar or substantially planar. To provide surfaces of ceramic discs that meet those requirements, the surfaces are typically grinded and / or polished during manufacture.

The arrangement disclosed in EP2444702A1 comprises bearings 40, 41 that connect the moving disc 30 to a channel 24. FIG 3 of EP2444702A1 depicts bearings 40, 41 that are ball-shaped. The connection between the moving disc 30 and the channel 24 also impacts on fluid-tightness, since the bearings 40, 41 transfer strains from the second channel 24 to the disc 30. The second channel 24 may, for instance, be strained as a result of thermal stresses or as a result of pressures inside and outside the valve.

To come up with a fluid-tight gasket between the discs 21 and 30, those strains need to be reduced to a minimum. The surface of the disc 30 in contact with the disc 21 and the opposite surface of the disc 30 in contact with the bearings 40, 41 require polishing. The requirement of ceramic discs with planar or with substantially planar surfaces adds to the cost of the valve. In addition, the ceramic material needs to be stiff in order to ensure minimum strains of the disc 30.

The present disclosure improves on valves with ceramic discs. The instant disclosure aims at providing a valve that allows technical tolerances to be relaxed.

### Summary

The present disclosure provides a disc assembly and / or a valve assembly that comprises a valve and a pair of ceramic discs. An inner ceramic disc is arranged adjacent a partition plate. The partition plate and the inner ceramic disc each provide a duct. A plunger is movably arranged in the duct and connects to an outer ceramic disc. The outer ceramic disc is arranged adjacent the inner ceramic disc such that the inner ceramic disc is interposed between the outer ceramic disc and the partition plate. The plunger may shift the outer ceramic disc relative to the inner ceramic disc and to the partition plate. The plunger does, however, allow (substantially) no displacement of the outer disc in a direction parallel to an envisaged direction of fluid flow.

The duct through the inner ceramic disc provides an aperture in the direction of the outer ceramic disc. This aperture is surrounded by a trough-shaped area. The trough-shaped area and the outer disc enclose a fluid with a pressure that matches the pressure inside the duct. As a fluid flows in the direction of the partition plate, a pressure is applied on an outer surface of the outer disc. That pressure exceeds the pressure inside the trough-shaped area. The outer ceramic disc is then pressed against the inner ceramic disc.

In an alternate embodiment, the partition plate is mounted (is affixed) to a valve housing. The partition plate is advantageously mounted to and / or secured relative to the same valve housing which also provides a duct (a guide element) for the plunger.

It follows that either direction of fluid flow causes the outer disc to be pressed against the inner disc.

The above problems are resolved by an assembly of discs and by a valve assembly in accordance with the main claims of this disclosure. Preferred embodiments of the present disclosure are covered by the dependent claims.

It is a related object of the instant disclosure to provide a disc assembly wherein the duct comprises a gasket disposed in between the partition plate and the inner ceramic disc. The distribution of pressures along the gasket shall be as uniform as possible. The duct gasket advantageously ensures fluid tightness such that no fluid can leak from in between the inner disc and the partition plate.

It is also an object of the instant disclosure to provide a disc assembly wherein the partition plate and the inner ceramic disc each provide a conduit. The two conduits of the partition plate and of the inner ceramic disc cooperate to form at least one common fluid path. The at least one common fluid path connects a first port of the conduit on the partition plate to a second port of the conduit of the inner disc. The second port of the inner disc terminates in the direction of the outer disc. The plunger is adapted to shift the outer disc such that a portion of the outer disc opens or closes the second port. The assembly thereby enables or obturates fluid flow through the at least one fluid path.

It is a related object of the instant disclosure to provide a disc assembly wherein the at least one common fluid path comprises a gasket disposed in between the partition plate and the inner ceramic disc. The distribution of pressures along the at least one gasket shall be as uniform as possible. The at least one conduit path gasket advantageously ensures fluid tightness such that no fluid can leak from in between the inner disc and the partition plate.

It is still an object of the present disclosure to provide a valve assembly and / or an arrangement of discs for a valve with a fixed disc and with a movable disc. The discs are made of a ceramic material. The discs are preferably made of engineering ceramics, yet more preferably of aluminum oxide (Al₂O₃) and / or of silicon carbide (SiC) and / or of zirconium dioxide (ZrO₂) and / or of magnesium oxide (MgO). The skilled person chooses a ceramics material such as aluminum oxide with a suitable level of purity such as 92%, 96%, or 99%. Higher levels of purity confer advantages in terms of mechanical stiffness and strength and / or dielectric strength.

It is still another object of the instant disclosure to provide a valve wherein the aforementioned assembly of inner (fixed) and outer (movable) discs forms a valve member. It is envisaged that the valve member ensures fluid tightness regardless of the direction of fluid flow.

It is also an object of the instant disclosure to provide a valve assembly and / or an assembly of discs for a valve with an inner disc and with an outer disc. The inner disc provides a protrusion with a surface that abuts the surface of the outer disc. The interface formed by the abutting surfaces shall be fluid-tight or substantially fluid-tight irrespective of the direction of fluid flow.

It is yet another object of the instant disclosure to provide a valve assembly and / or an assembly of discs for a valve with at least one gasket disposed in between the partition plate and the inner disc. The distribution of pressures along the gasket shall be as uniform as possible.

It is a related object of the instant disclosure to provide a valve assembly and / or an assembly of discs for a valve wherein the discs are perpendicular or substantially perpendicular to the flow path through the valve.

It is also an object of the instant disclosure to provide a valve assembly and / or an assembly of discs for a valve wherein the inner (fixed) disc and the outer (movable) disc are arranged in parallel. It is a related object of the instant disclosure to provide a valve assembly and / or an assembly of discs for a valve wherein the inner (fixed) disc and the outer (movable) disc and the partition plate are all parallel.

The present disclosure further provides a circuit for heating, cooling, air-conditioning and / or ventilation that comprises a valve in accordance with the instant disclosure.

### Brief description of the drawings

Various features will become apparent to those skilled in the art from the following detailed description of the disclosed non-limiting embodiments. The drawings that accompany the detailed description can be briefly described as follows:
FIG 1 is a cross-section view of a disc assembly according to the present disclosure.
FIG 2 is another cross-section view of the disc assembly in a plane perpendicular to that of FIG 1 with a valve member of the disc assembly shown in an open position.
FIG 3 is yet another cross-section view of the disc assembly in the same direction as FIG 2 with the valve member shown in a closed position.

### Detailed decription

The disc assembly of the instant disclosure is typically part of a valve. The valve provides an enclosure with at least one inlet and with at least one outlet. A fluid path connects the at least one inlet to the at least one outlet. A valve according to the instant disclosure also provides a valve element disposed in the fluid path. In a first position, the valve element enables fluid flow through the fluid path. In a second position, the valve element obturates fluid flow.

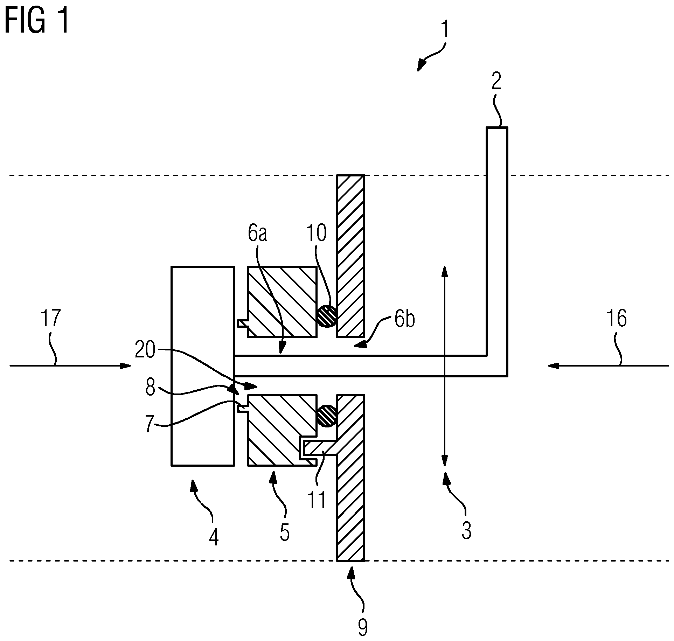

FIG 1 shows a disc assembly 1 for a valve element. The disc assembly 1 provides a plunger 2. The plunger 2 is adapted to move along a direction indicated by arrow 3. It is envisaged that the valve provides an enclosure with a guide member for the plunger 2. The skilled person selects a suitable guide member such as a duct and / or bore and / or a bushing and / or a bearing in order that plunger 2 may move as indicated by arrow 3. The skilled person also envisages seals such as O-rings to ensure fluid-tightness of the duct and / or the bore and / or the bushing and / or the bearing.

It is envisaged that plunger 2 has exactly one degree of freedom as indicated on FIG 1 by arrow 3.

Plunger 2 is affixed to an outer disc 4 (also referenced as movable disc 4 herein). Outer disc 4 is ideally made of ceramics, preferably of engineering ceramics, yet more preferably of aluminum oxide (Al₂O₃) and / or of silicon carbide (SiC) and / or of zirconium dioxide (ZrO₂) and / or of magnesium oxide (MgO). The skilled person chooses a ceramics material such as aluminum oxide with a suitable level of purity such as 92%, 96%, or 99%. Higher levels of purity confer advantages in terms of mechanical tightness, mechanical brittleness, and dielectric strength.

According to an aspect, movable disc 4 is coated with a suitable material such as a ceramics material. The coating is advantageously selected from the above list of ceramics materials. The coating may also be made of a diamond-like carbon layer and / or of a diamond-like carbon material.

According to another aspect, movable disc 4 is made of or is coated with a material with a modulus of elasticity of at least 100 GPa, preferably at least 250 GPa, yet more preferred of at least 400 GPa.

The moveable disc 4 has a top surface and a bottom surface that define a through-hole between the two surfaces. One end of the plunger 2 extends through the through-hole of the disc 4. The disc assembly further comprises at least one O-ring disposed between the end of the plunger 2 and the disc 4. The at least one O-ring functions to ensure fluid is inhibited from flowing between the disc 4 and the plunger 2. The at least one O-ring is typically placed in between a (cylindrical) through-hole through movable disc 4 and the far end of plunger 2. The mechanical connection of plunger 2 to movable disc 4 advantageously comprises the at least one O-ring such as an O-ring made of (polymer) rubber. Plunger 2 may, by way of non-limiting example, be anchored to movable disc 4 via a bolt and / or via a friction-lock and / or via a sleeve-type joint.

An inner disc 5 is mounted adjacent movable disc 4. Inner disc 5 is ideally made of ceramics, preferably of engineering ceramics, yet more preferably of aluminum oxide (Al₂O₃) and / or of silicon carbide (SiC) and / or of zirconium dioxide (ZrO₂) and / or of magnesium oxide (MgO). The skilled person chooses a ceramics material such as aluminum oxide with a suitable level of purity such as 92%, 96%, or 99%. Higher levels of purity confer advantages in terms of mechanical tightness, mechanical brittleness, and dielectric strength.

According to an aspect, fixed disc 5 is coated with a suitable material such as a ceramics material. The coating is advantageously selected from the above list of ceramics materials.

According to another aspect, fixed disc 5 is made of or is coated with a material with a modulus of elasticity of at least 100 GPa, preferably at least 250 GPa, yet more preferred of at least 400 GPa.

Inner disc 5 comprises two planar surfaces that define a duct 6a extending between the two surfaces. The duct 6a is sized to enable plunger 2 to extend through the duct6a . Duct 6a advantageously is a bore and / or a through-hole through disc 5. Duct 6a provides apertures on either side of inner disc 5. Duct 6a has a centre axis that is parallel to a connection between the apertures of duct 6a. It is envisaged that the cross-section of duct 6a around its centre axis is elliptical or substantially elliptical or rectangular or substantially rectangular. Duct 6a also has a length dimension 6a that is parallel to the centre axis (and also parallel to arrows 16, 17) and a cross-section diameter that is perpendicular to the centre axis. The length dimension of duct 6a is chosen such that plunger 2 may move in a direction that is parallel to arrow 3 and is perpendicular to the centre axis of duct 6a.

Plunger 2 is mounted to the enclosure and / or to the housing of the valve such that any play in a direction parallel to the centre axis of duct 6a is minimized. To that end, the skilled person chooses a guide member that allows plunger 2 to move along directions parallel to arrow 3. The guide member at the same time restrains any displacement of plunger 2 in a direction parallel to the centre axis of duct 6a. That is, plunger 2 can shift movable disc 4 in directions parallel to arrow 3. Plunger 2 cannot shift outer disc 4 back and forth along the centre axis of duct 6a (a direction depicted by arrows 16 and 17 in FIG 1) so as to separate movable disc 4 from fixed disc 5. It is envisaged that the housing of the valve also encloses mobile disc 4, fixed disc 5 and partition plate 9.

The skilled person also chooses a material for plunger 2 that is sufficiently stiff thereby minimizing play. In an embodiment, plunger 2 is made of austenitic (stainless) steel. In an alternate embodiment, plunger 2 is made of ferrite steel. In yet another embodiment, plunger 2 is made of an (aluminum) alloy.

Duct 6a provides an interface aperture 20 in the direction of movable disc 4 such that plunger 2 may connect to movable disc 4. A duct protruding portion 7 and / or collar 7 of fixed disc 5 (circumferentially) surrounds the interface aperture 20 of duct 6a. According to an aspect, a cross-section of protruding portion 7 in a direction perpendicular to the centre axis of duct 6a is polygonal, in particular rectangular or quadratic.

Protruding portion 7 circumferentially surrounds the interface aperture 20 of duct 6a forming and / or defining a trough-shaped portion 8 between fixed disc 5 and movable disc 4. Protruding portion 7 effectively provides a rim and/or a (circumferential) wall that surrounds trough-shaped portion 8. Trough-shaped portion 8 is in fluid communication with duct 6a through its interface aperture 20.

Duct protruding portion 7 has a diameter that is parallel to the diameter of duct 6a. The diameters of duct protruding portion 7 and of duct 6a are both perpendicular to the centre axis of duct 6a. It is envisaged that the diameter of duct protruding portion 7 exceeds the diameter of duct 6a. In an embodiment, the diameter of duct protruding portion 7 exceeds that of duct 6a at least by a factor 1.5, preferably at least by a factor 2.0, still more preferred at least by a factor 2.5.

Protruding portion 7 provides a planar or substantially planar surface (such as a grinded and / or polished surface) that abuts an adjacent surface of movable disc 4. The adjacent surface of movable disc 4 is also planar or substantially planar (such as grinded and / or polished) such that abutment of the two mutually abutting surfaces yields a fluid-tight interface (such as a seal). Advantageously, any gap between the two surfaces is at most 0.58 micrometers wide, more preferably at most 0.35 micrometers wide, still more preferred at most 0.2 micrometers wide. Plunger 2 is advantageously aligned with disc 4 and duct protruding portion 7 so as to ensure uniform pressure between the abutting surfaces.

It is envisaged that duct protruding portion 7 and / or trough-shaped portion 8 are integral parts of fixed disc 5. Ideally, protruding portion 7 and fixed disc 5 are made of the same material.

A partition plate 9 is disposed adjacent fixed disc 5. Partition plate 9 has two surfaces that define a duct 6b that cooperates with duct 6a of fixed disc 5. Ducts 6a and 6b of fixed disc 5 and of partition plate 9 cooperate so as to define and / or provide a common duct for plunger 2. The common duct has a length corresponding to (associated with) the length between the opposing ends of ducts 6a and 6b (referenced herein as common duct 6a, 6b). A portion of plunger 2 is arranged inside the common duct.

Duct 6b advantageously is a bore and / or a through-hole and / or a bushing through partition plate 9. Duct 6b provides apertures on either side of partition plate 9. Duct 6b has a centre axis that is parallel to a connection between the apertures of duct 6b. It is envisaged that the cross-section of duct 6b perpendicular to its centre axis is rectangular or substantially rectangular. Duct 6b also has a length dimension that is parallel to the centre axis (and parallel to arrows 16, 17) and a cross-section diameter that is perpendicular to its centre axis. The length dimension of duct 6b is chosen such that plunger 2 may move in a direction that is parallel to arrow 3 and is perpendicular to the centre axis of duct 6b. In a particular embodiment, the symmetry axes of ducts 6a and 6b coincide or substantially coincide. In one embodiment, it is envisaged that the length dimension of duct 6b is the same or substantially the same as the length dimension of duct 6a. In another embodiment, it is envisaged that the length dimension of duct 6b is less than the length dimension of duct 6a.

In an embodiment, partition plate 9 is made of a metallic material such as steel, in particular austenitic (stainless) steel or ferrite steel. In an alternate embodiment, of partition plate 9 is made of aluminum (alloy). In yet another embodiment, partition plate 9 is made of ceramics, preferably of engineering ceramics, yet more preferably of aluminum oxide (Al₂O₃) and / or of silicon carbide (SiC) and / or of zirconium dioxide (ZrO₂) and / or of magnesium oxide (MgO). The skilled person chooses a ceramics material such as aluminum oxide with a suitable level of purity such as 92%, 96%, or 99%. Higher levels of purity confer advantages in terms of mechanical tightness, mechanical brittleness, and dielectric strength.

According to an aspect, partition plate 9 is coated with a suitable material such as a ceramics material. The coating is advantageously selected from the above list of ceramics materials.

According to another aspect, partition plate 9 is made of or is coated with a material with a modulus of elasticity of at least 100 GPa, preferably at least 250 GPa, yet more preferred of at least 400 GPa.

A gasket 10 separates partition plate 9 from fixed inner disc 5 such that partition plate 9 and inner disc 5 are spaced apart. Gasket 10 seals the portion in between plate 9 and disc 5 of common duct 6a, 6b. According to an aspect, gasket 10 is elliptic annular or circular annular. Gasket 10 envelopes the portion of common duct 6a, 6b, 10 in between partition plate 9 and fixed disc 5. It is also envisaged that gasket 10 is flat and / or has a cross-section that is rectangular or substantially rectangular or quadratic or substantially quadratic. According to a related aspect, gasket 10 is an O-ring such as an O-ring made of (polymer) rubber. It is envisaged that partition plate 9 provides a groove that limits play of gasket 10. It is also envisaged that fixed disc 5 provides a groove that limits play of gasket 10. In a particular embodiment, both partition plate 9 and inner disc 5 provide play-limiting grooves for gasket 10.

Partition plate 9 also comprises a least a (cylindrical) pin 11. The at least one pin 11 functions to define the position of fixed disc 5 relative to partition plate 9. To that end, fixed disc 5 may have a recess and / or a slot that accommodates, receives, and / or mates with the far end of pin 11.

It is envisaged that partition plate 9 provides more than one pin to define the orientation of partition plate 9 relative to fixed disc 5.

Pin 11 may be an integral part of partition plate 9. Pin 11 is advantageously made of the same material as partition plate 9. In an alternate embodiment, pin 11 is welded or bolted to partition plate 9.

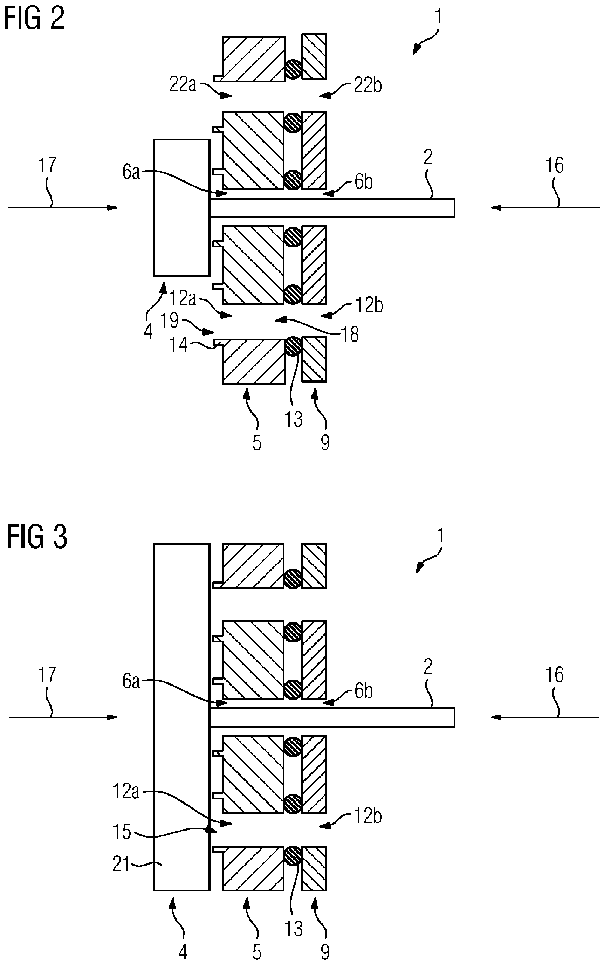

Now turning to FIG 2, a cross-section of the same disc assembly is shown as on FIG 1 at an angle perpendicular to that of FIG 1. Arrow 3 on FIG 1 points in a direction that is perpendicular to the plane of FIG 2.

Common duct 6a, 6b as shown on FIG 2 has a width dimension perpendicular to its centre axis and parallel to the plane of the cross-sectional view shown in FIG 2. The width dimension of common duct 6a, 6b is generally less than the length dimensions of ducts 6a, 6b. The width dimension of common duct 6a, 6b is chosen such that it just exceeds the width of plunger 2. That is, the widths (and the walls) of common duct 6a, 6b and (the diameter) of plunger 2 cooperate to restrict or to substantially restrict the degrees of freedom of plunger 2. Plunger 2 may shift movable disc 4 in a direction parallel to arrow 3 of FIG 1. Plunger 2 cannot or cannot substantially displace movable disc 4 in a direction parallel to the plane defined by the cross-sectional view of FIG 2.

In an embodiment, ducts 6a and 6b have the same width dimensions. In an alternate embodiment, the width of duct 6b exceeds that of duct 6a. Accordingly, duct 6a and / or duct 6b restricts or substantially restricts the degrees of freedom of plunger 2.

Partition plate 9 and fixed disc 5 also define and / or provide cooperating valve conduits 12b and 12a. Cooperating valve conduit 12b of partition plate 9 has an inner aperture directed toward fixed disc 5 and a valve port aperture on the opposite surface of plate 9. A fluid path is established between the inner aperture and the valve port aperture of conduit 12b. Valve conduit 12b also has a centre axis that runs from the inner aperture of conduit 12b and to the valve port aperture of conduit 12b. It is envisaged that the cross-section of cooperating valve conduit 12b perpendicular to the centre axis of conduit 12b is polygonal, in particular triangular or quadratic. In an alternate embodiment, cooperating valve conduit 12b has cylindrical symmetry.

Cooperating valve conduit 12a of fixed disc 5 has an inner aperture 18 directed toward partition plate 9 and a valve port aperture and / or interface aperture 19 in the direction of movable disc 4. A fluid path is established between the inner aperture and the valve port aperture of conduit 12a. Valve conduit 12a also has a centre axis that runs from the inner aperture of conduit 12a and to the valve port aperture of conduit 12a. According to an aspect, the symmetry axes of cooperating conduits 12a and 12b coincide. It is envisaged that the cross-section of cooperating valve conduit 12a perpendicular to the centre axis of conduit 12a is polygonal, in particular triangular or quadratic. In an alternate embodiment, cooperating valve conduit 12a has cylindrical symmetry. According to an aspect, the cross-section of valve conduit 12a matches the cross-section of valve conduit 12b.

Valve conduits 12a, 12b cooperate to form a common fluid path. This common fluid path has a first end in the form of valve port aperture of conduit 12b of partition plate 9. The same common fluid path has a second end in the form of valve port aperture 19 of conduit 12a.

The common fluid path defined by valve conduits 12a, 12b also comprises a gasket 13. Gasket 13 seals the portion in between plate 9 and disc 5 of this common fluid path. Gasket 13 is arranged in between cooperating valve conduits 12a, 12b. Gasket 13 is also arranged in between partition plate 9 and fixed disc 5. Gasket 13 thereby separates partition plate 9 from fixed disc 5 such that partition plate 9 and fixed disc 5 are spaced apart. According to an aspect, the shape of gasket 13 is toroidal. According to a related aspect, gasket 13 is an O-ring such as an O-ring made of (polymer) rubber. It is envisaged that partition plate 9 provides a groove that limits play of gasket 13. It is also envisaged that fixed disc 5 provides a groove that limits play of gasket 13. In a particular embodiment, both partition plate 9 and inner disc 9 provide play-limiting grooves for gasket 13.

The disc assembly 1 shown on FIG 2 corresponds to (is associated with) a valve member in an open position. In its open position, movable disc 4 does not obturate the second end of common fluid path 12a, 12b. A fluid such as water may thus enter common fluid path 12a, 12b through its first aperture and leave through its second aperture and vice versa.

Now referring to FIG 3, the valve member corresponding to (being associated with) the disc assembly 1 is shown in a closed position. In its closed position, plunger 2 has displaced movable disc 4 in a direction perpendicular to the view plane of FIGs 2 and 3. Consequently, a portion of movable disc 4 obturates the second end of common fluid path 12a, 12b. A fluid such as water can no longer enter or leave common fluid path 12a, 12b through its second aperture.

The skilled person also envisages a multitude of positions of movable disc 4 in between a fully closed position and a fully open position of common fluid conduit 12a, 12b. According to an aspect, plunger 2 and (the cover portion 21 of) movable disc 4 are adapted to continuously open or close the second aperture of common fluid conduit 12a, 12b. According to another aspect, plunger 2 and (the cover portion of) movable disc 4 are adapted to open or close the second aperture of common valve conduit 12a, 12b in discrete steps.

A valve protruding portion 14 of fixed disc 5 (circumferentially) surrounds the second aperture of common valve conduit 12a, 12b. According to an aspect, a cross-section of protruding portion 14 in a direction perpendicular to the centre axis of common valve conduit 12a, 12b is polygonal, in particular quadratic.

Valve protruding portion 14 circumferentially surrounds the second aperture of common valve conduit 12a, 12b forming and / or defining a trough-shaped portion 15 between fixed disc 5 and movable disc 4. Valve protruding portion 14 effectively provides a rim and / or a (circumferential) wall that surrounds trough-shaped portion 15. Trough-shaped portion 15 is in fluid communication with common fluid valve conduit 12a, 12b through its second aperture.

Protruding portion 14 provides a planar or substantially planar surface (such as a grinded and / or polished surface) that abuts an adjacent surface of movable disc 4. The adjacent surface of movable disc 4 is also planar or substantially planar (such as grinded and / or polished) such that abutment of the two mutually abutting surfaces yields a fluid-tight interface (such as a seal). Advantageously, any gap between the two surfaces is at most 0.58 micrometers wide, more preferably at most 0.29 micrometers wide, still more preferred at most 0.2 micrometers wide.

It is envisaged that protruding portion 14 and / or trough-shaped portion 15 are integral parts of fixed disc 5. Ideally, protruding portion 14 and fixed disc 5 are made of the same material.

Valve protruding portion 14 has a diameter that is parallel to the diameter of conduit 12a. The diameters of protruding portion 14 and of conduit 12a are both perpendicular to the centre axis of conduit 12a. It is envisaged that the diameter of valve protruding portion 14 exceeds the diameter of conduit 12a. In an embodiment, the diameter of protruding portion 14 exceeds that of conduit 12a at least by a factor 1.5, preferably at least by a factor 2.0, still more preferred at least by a factor 2.5.

Considerations similar to common valve conduit 12a, 12b apply to the further common valve conduit 22a, 22b shown on FIG 2.

A fluid such as water flowing in the direction indicated on FIG 1 by arrow 16 will impinge on an upstream (outbound) surface of partition plate 9. This direction of flow thus yields a pressure applied on an outbound surface of partition plate 9. That pressure applied on the effective area of the upstream surface of plate 9 causes partition plate 9 to exert a force on the housing of the assembly 1. In addition, the at least one gasket 10 and the at least one pin 11 mitigate transfer of deformations from the partition plate 9 to the fixed disc 5.

The skilled person understands that the pressures applied to the mutually abutting surfaces need be sufficiently uniform to ensure fluid-tightness. The skilled person also understands that fluid-tightness requires mutually abutting surfaces that are sufficiently even. In a particular embodiment, the pressure applied by to the mutually abutting surfaces is at least 0.6 MPa, preferably at least 1.5 MPa, or even at least 2.5 MPa. According to an aspect, any gap between the surfaces in mutual abutment is at most 0.58 micrometers wide, more preferably at most 0.29 micrometers wide, still more preferred at most 0.2 micrometers wide.

A fluid may also impinge on disc assembly 1 from a direction 17 opposite to direction 16. The fluid flow in direction 17 will first reach and / or impinge on an outbound surface of movable disc 4. This direction 17 of flow thus yields a pressure applied on an outbound surface of movable disc 4. That pressure applied on the effective area of the upstream surface of movable disc 4 causes disc 4 to exert a force in the direction of disc 5. The duct protruding portion 7 and / or any valve protruding portions 14 transfer the force applied to disc 4 to fixed disc 5. Inner disc 5 then abuts partition plate 9. Inner disc 5 thus applies this force to partition plate 9.

If a fluid flows in the direction indicated by arrow 17 on FIG 1, the pressure upstream of assembly 1 generally exceeds the pressure downstream of assembly 1. That is, the fluid pressure along an outbound surface of upstream disc 4 exceeds the pressure along an outbound surface of partition plate 9. No fluid would otherwise flow in direction 17 toward partition plate 9.

Duct 6b, 6a transfers the pressure downstream of disc assembly 1 to trough-shaped portion 8. That is, the pressure inside trough-shaped portion 8 corresponds to (is associated with) the downstream pressure of assembly 1. The same downstream pressure is also applied to an end face (wall) of trough-shaped portion 8 that is part of movable disc 4. The surface area of this end face of trough-shaped portion 8 is limited by duct protruding portion 7. As downstream pressure is applied to the (effective) surface area of the end face of trough-shaped portion 8, a force is applied to movable disc 4. That force drives movable disc 4 away from fixed disc 5.

Surfaces of movable disc 4 other than the surface in abutment with protruding portion 7 and the end face of trough-shaped portion 8 are exposed to upstream pressure. A force results from these pressures that drives movable disc 4 toward fixed disc 5. This force exceeds the force from within trough-shaped portion 8, since upstream pressure exceeds downstream pressure. The sum of the forces applied to movable disc 4 thus drives movable disc 4 in the direction of fixed disc 5. In other words, a low (downstream) pressure inside trough-shaped portion 8 sucks movable disc 4 toward fixed disc 5.

Due to the suction effect from inside trough-shaped portion 15, a pressure is applied between the mutually abutting surfaces of movable disc 4 and protruding portion 7. Since movable disc 4 and protruding portion 7 each provide surfaces in mutual abutment, no fluid can leak from trough-shaped portion 8.

The skilled person advantageously chooses trough-shaped portion 8 with diameters that exceed the diameter of duct protruding portion 7. The larger diameter of trough-shaped portion 8 compared to the diameter of duct protruding portion 7 increases the pressure-induced forces between movable disc 4 and fixed disc 5. That is, an increase in cross-section of trough-shaped portion 8 entails improved fluid-tightness. Any forces between movable disc 4 and fixed disc 5 can, in particular, be amplified by choosing a trough-shaped portion 8 or several trough-shaped portions with suitable diameters.

The effect of increased pressure-induced forces is particularly relevant to discs 4, 5 made of ceramics materials, since such discs exhibit only minimum elasticity. Amplification of pressures between discs 4 and 5 enables narrowing or even closure of any remaining gaps between the mutually abutting surfaces. At the same time, the forces pressing the discs 4, 5 against each other should not be excessive. The assembly may otherwise require a more powerful actuator for plunger 2 in order to compensate for additional friction between the surfaces of the discs 4, 5.

The skilled person understands that the pressures applied to the mutually abutting surfaces need be sufficiently uniform to ensure fluid-tightness. The skilled person also understands that fluid-tightness requires mutually abutting surfaces that are sufficiently planar. In an embodiment, the pressure applied by to the mutually abutting surfaces is at least 0.6 MPa, preferably at least 1.5 MPa, or even at least 2.5 MPa. According to an aspect, any gap between the surfaces in mutual abutment is at most 0.58 micrometers wide, more preferably at most 0.35 micrometers wide, still more preferred at most 0.2 micrometers wide.

Similar considerations apply to trough-shaped areas 15 for valve conduits 12a, 12b. With the valve assembly in its closed position, trough-shaped portions 15 provide a suction effect similar to that of trough-shaped portion 8.

It is possible that during operation particles accumulate along the abutting surfaces of collars 7, 14 and of movable disc 4. These particles may introduce gaps between the mutually abutting surfaces. These gaps may then lead to leakages. Particles between the mutually abutting surfaces may also result in additional or actually in reduced friction.

It is also envisaged that a bracket is mounted to the far end of plunger 2 and / or to movable disc 4. This bracket comprises a slider that enables movement of plunger 2 and / or of movable disc 4 along the direction indicated on FIG 1 by arrow 3. The bracket and / or its slider also restricts or substantially restricts any degrees of freedom of the plunger 2 and / or movable disc 4 in directions perpendicular to arrow 3. The bracket is advantageously mounted to partition plate 9. The bracket thus defines the mutual arrangement of movable disc 4 and partition plate 9.

Plunger 2 generally connects to an actuator for actuating (reciprocating) plunger 2. That actuator may, by way of non-limiting example, be a linear drive. A pair of wires connects to the actuator for supplying the actuator with power.

In an embodiment, a power meter (such as a current meter) provides a signal indicative of the power intake of the actuator. The power meter advantageously connects in series with the pair of wires of the actuator.

In order to monitor any open / close procedure, a controller records power intake of the actuator during open or close operations. Controller may, in particular, record power intake during open or close operations at a plurality of positions of plunger 2. These positions may include, but are not limited to, the end positions of plunger 2 as well as several positions in between the end positions of plunger 2.

In an embodiment, controller implements a neural network. The neural network comprises a plurality of input neurons that correspond to (are associated with) power intake at the various positions of plunger 2. Any input to the neural network is ideally normalized. The neural network also comprises an output neuron indicative of normal or of abnormal operation. According to an aspect, a value produced by output neuron of 0 indicates failure whereas an output value of 1 indicates normal operation. The neural network also comprises a number of hidden layers, each layer with a number of hidden neurons. In an embodiment, the neural network comprises one layer of hidden neurons. The number of neurons (perceptrons) in that layer is (approximately) double the number of input neurons for the network. The neurons may, by way of non-limiting example, have sigmoid and / or hyperbolic tangent and / or step-wise activation functions. The neurons are advantageously biased.

The neural network is ideally trained under laboratory conditions. A series of measurements obtained from normal valves as well as from faulted valves is employed to train the network. The neural network may, by way of example, be trained by a supervised training algorithm such as backpropagation. It is also envisaged that the neural network is trained using an evolutionary algorithm such as a genetic algorithm. The skilled artisan may actually combine training algorithms. A genetic algorithm may, by way of example, be employed to find a coarse estimate of the weights of the connections of the neural network. A backpropagation algorithm is then employed to further improve on the performance of the network. The skilled person also pays due regard to minimizing false positives and / or false negatives. False negatives indicate a faulted valve where the disc assembly is fine. False positives indicate normal operation where the disc assembly is faulted, e.g. faulted due to (abrasive) particles.

After training the configuration of the neural network and / or the weights of the connections of the neural network are saved in a memory of the valve controller. In operation controller collects measurements of power intake at various positions and feeds them into the neural network. The neural network produces an output signal indicative of the condition of the assembly based, preferably directly based, on its inputs.

In an embodiment, the controller produces and signals an alarm when the valve assembly is found in faulted condition. The alarm may, by way of example, be dispatched via an audible signal or via a message to an operator. To that end, controller provides suitable interfaces. Controller may as well initiate a cleaning cycle with a plurality of open and / or close operations in order to remove particles from relevant surfaces.

In other words, the instant disclosure teaches a disc assembly for a valve member, the disc assembly comprising:
a plunger 2 and a movable disc 4 coupled to, preferably anchored to, in an embodiment directly coupled to, in another embodiment directly anchored to, the plunger 2;
a partition plate 9 and a fixed disc 5 interposed between the partition plate 9 and the movable disc 4;
wherein the fixed disc 5 and the partition plate 9 each comprise a duct 6a, 6b, the ducts 6a, 6b being in fluid communication and receiving the plunger 2 and at least one of the ducts 6a, 6b having a cross-section such that the plunger 2 is configured to reciprocate along an axis determined by the cross-section and to reciprocate the movable disc 4 relative to the fixed disc 5 along the determined axis;
wherein the duct 6a of the fixed disc 5 has and / or provides an end that defines an interface aperture 20 having an outer circumference, the interface aperture 20 opening in the direction of the movable disc 4;
wherein the fixed disc 5 comprises a collar 7 protruding from the fixed disc 5 in the direction of the movable disc 4 and looping about the outer circumference of the interface aperture 20 of the duct 6a of the fixed disc 5;
the disc assembly also comprising a trough-shaped portion 8 defined and bounded by the protruding collar 7, by the fixed disc 5 and by the movable disc 4, the trough-shaped portion 8 being in fluid communication with the duct 6a of the fixed disc 5 via the interface aperture 20;
wherein the movable disc 4 and the protruding collar 7 each has a surface in mutual abutment with each other such that the mutually abutting surfaces of the movable disc 4 and of the protruding collar 7 form a seal about the trough-shaped portion 8,
wherein a first pressure of a fluid applied to the movable disc 4 from inside the trough-shaped portion 8 and a second pressure of a fluid applied to the movable disc 4 from outside the trough-shaped portion 8, the second pressure exceeding the first pressure, are configured to apply a force to the movable disc 4 that presses the abutting surface of movable disc 4 against the abutting surface of the protruding collar 7 of the fixed disc 5.

In an embodiment, the interface aperture 20 has a first diameter and the trough-shaped portion 8 has a second diameter, the first diameter of the trough-shaped portion 8 exceeding the second diameter of the interface aperture 20 by a factor of at least 1.2, of at least 2.5 or of at least 5. The first diameter of the trough-shaped portion is at least 1 mm, preferably at least 2 mm, yet more preferred at least 5 mm. The collar 7 ideally protrudes at least 1 mm and / or at least 2 mm and / or at least 5 mm from the fixed disc 5. Plunger 2 advantageously reciprocates the movable disc 4 thereby displacing movable disc 4 laterally.

According to an aspect, a first pressure of a fluid applied to the movable disc 4 and to the fixed disc 5 from inside the trough-shaped portion 8 and a second pressure of a fluid applied to the movable disc 4 from outside the trough-shaped portion 8, the second pressure exceeding the first pressure, are configured to apply forces to the movable disc 4 and to the fixed disc 5 that press the abutting surface of movable disc 4 against the abutting surface of the protruding collar 7 of the fixed disc 5. In an embodiment, the movable disc 4 is a mobile disc.

It is envisaged that the movable disc 4 and the protruding collar 7 each provide surfaces in mutual abutment such that the mutually abutting surfaces of the movable disc 4 and of the protruding collar 7 form a seal, preferably a fluid-tight seal, of the trough-shaped portion 8, such that the fluid-tight seal seals the portion of the trough-shaped portion 8 in between the protruding collar 7 and the movable disc 4.

In an embodiment, the interface aperture 20 of the duct 6a is a mouth.

According to an aspect, the partition plate 9 is a flange.

The instant disclosure also teaches one of the aforementioned disc assemblies, the disc assembly further comprising a common duct 6a, 6b, 10,
wherein the common duct 6a, 6b, 10 comprises the duct 6a of the fixed disc 5 and the duct 6b of the partition plate 9 and additionally comprises a portion in between the partition plate 9 and the fixed disc 5 and a gasket 10 enveloping the portion of the common duct 6a, 6b, 10 in between the partition plate 9 and the fixed disc 5;
wherein the gasket 10 is interposed between the partition plate 9 and the fixed disc 5;
wherein the gasket 10 seals the portion of the common duct 6a, 6b, 10 in between the partition plate 9 and the fixed disc 5.

The instant disclosure also teaches one of the aforementioned disc assemblies the plunger 2 comprises a portion enveloped by the common duct 6a, 6b, 10,
wherein the enveloped portion of the plunger 2 has an axis,
wherein at least one of the ducts 6a, 6b has a cross-section configured to inhibit movement of the plunger 2 in a direction that is perpendicular to the determined axis and perpendicular to the axis of the enveloped portion of the plunger 2.

It is envisaged that the least one of the ducts 6a, 6b has a cross-section configured to substantially prevent and / or inhibit movement of the plunger 2 and / or limit play of the plunger 2 in a direction that is perpendicular to the determined axis and perpendicular to the axis of the enveloped portion of the plunger 2.

The instant disclosure also teaches one of the aforementioned disc assemblies, wherein the axis of the enveloped portion of the plunger 2 is perpendicular to the abutting surface of the protruding collar 7.

The instant disclosure also teaches one of the aforementioned disc assemblies, wherein the axis of the enveloped portion of the plunger 2 is perpendicular to the abutting surface of the movable disc 4.

The instant disclosure also teaches one of the aforementioned disc assemblies,
wherein the partition plate 9 comprises at least one engaging means 11 and the fixed disc 5 comprises at least one recess,
wherein the at least one recess of the fixed disc 5 receives the at least one engaging means 11 of the partition plate 9 thereby defining the position of the fixed disc 5 relative to the partition plate 9.

The at least one recess of the fixed disc 5 advantageously mates with the engaging means 11 and / or with the pin 11. Engaging means 11 in an embodiment is a coupling means.

The instant disclosure also teaches one of the aforementioned disc assemblies,
wherein the fixed disc 5 comprises at least one anchorage and / or coupling means and the partition plate 9 comprises at least one recess,
wherein the at least one recess of the partition plate 9 receives the at least one engaging means 11 of the fixed disc thereby defining the position of the partition plate 9 relative to the fixed disc 5.

Engaging means 11 advantageously is a pin. The at least one recess of the partition plate 9 advantageously mates with the engaging means 11 and / or with the pin 11.

The instant disclosure also teaches one of the aforementioned disc assemblies,
wherein the fixed disc 5 and the partition plate 9 each comprise at least one valve conduit 12a, 12b, the at least one valve conduit 12a of the fixed disc 5 being in fluid communication with the at least one valve conduit 12b of the partition plate 9.

The instant disclosure also teaches one of the aforementioned disc assemblies, wherein the disc assembly further comprises at least one common valve conduit 12a, 12b, 13,
wherein the at least one common valve conduit 12a, 12b, 13 comprises the at least one valve conduit 12a of the fixed disc 5 and the at least one valve conduit 12b of the partition plate 9 and additionally comprises a portion in between the partition plate 9 and the fixed disc 5 and at least one valve gasket 13 enveloping the portion of the common valve conduit 12a, 12b, 13 in between the partition plate 9 and the fixed disc 5,
wherein the at least one valve gasket 13 is interposed between the partition plate 9 and the fixed disc 5,
wherein the at least one valve gasket 13 seals the portion of the at least one common valve conduit 12a, 12b, 13 in between the partition plate 9 and the fixed disc 5.

The instant disclosure also teaches one of the aforementioned disc assemblies,
wherein the at least one valve conduit 12a of the fixed disc 5 has an end that defines an interface aperture 19 having an outer circumference, the interface aperture 19 of the at least one valve conduit 12a of the fixed disc 5 opening in the direction of the movable disc 4,
wherein the fixed disc 5 comprises at least one valve collar 14 protruding from the fixed disc 5 in the direction of the movable disc 4 and looping about the outer circumference of the interface aperture 19 of the at least one conduit 12a of the fixed disc 5.

In an embodiment, the interface aperture 19 of the at least one valve conduit 12a of the fixed disc 5 is a mouth. The valve collar 14 ideally protrudes at least 1 mm and / or at least 2 mm and / or at least 5 mm from the fixed disc 5.

In an embodiment, the interface aperture 19 of the at least one valve conduit 12a of the fixed disc 5 has a first diameter and the at least another trough-shaped portion 15 has a second diameter, the first diameter exceeding the second diameter by a factor of at least 1.2, of at least 2.5 or of at least 5. The first diameter of the at least one trough-shaped portion 15 is at least 1 mm, preferably at least 2 mm, yet more preferred at least 5 mm.

The instant disclosure also teaches one of the aforementioned disc assemblies, the disc assembly further comprising at least another trough-shaped portion 15 defined and bounded by the at least one protruding valve collar 14 and by the fixed disc 5, the at least another trough-shaped portion 15 being in fluid communication with the at least one valve conduit 12a of the fixed disc 5 via the interface aperture 19 of the at least one valve conduit 12a of the fixed disc 5.

The instant disclosure also teaches a valve member comprising one of the aforementioned disc assemblies,
wherein the movable disc 4 additionally comprises at least one cover portion 21,
wherein the at least one cover portion 21 of the movable disc 4 and the at least one protruding valve collar 14 each has a surface in mutual abutment with each other,
wherein the plunger 2 is configured to move the movable disc 4 and the at least one cover portion 21 of the movable disc 4 to a closed position
such that in the closed position the surfaces configured for mutual abutment of the at least one cover portion 21 and of the at least one protruding valve collar 14 form a seal of the at least another trough-shaped portion 15
thereby obturating fluid flow through the at least one common valve conduit 12a, 12b, 13.

The instant disclosure also teaches a valve member comprising one of the aforementioned disc assemblies,
wherein the movable disc 4 additionally comprises at least one cover portion 21,
wherein the at least one cover portion 21 of the movable disc 4 and the at least one protruding valve collar 14 each has a surface in mutual abutment with each other,
wherein the plunger 2 is configured to move the movable disc 4 and the at least one cover portion 21 of the movable disc 4 in an open position
such that in the open position the at least one cover portion 21 of the movable disc 4 uncovers the at least another trough-shaped portion 15 thereby enabling fluid flow through the at least one common valve conduit 12a, 12b, 13.

It is envisaged that in the open position the at least one cover portion 21 of the movable disc 4 uncovers the at least another trough-shaped portion 15 thereby enabling fluid flow through the at least one common valve conduit 12a, 12b, 13, wherein in the open position the surfaces for mutual abutment of the movable disc and of the at least one protruding valve collar 14 do not abut completely and / or close completely.

It is also envisaged that the cover portion 21 of the movable disc 4 is arranged at or near a far end of the movable disc 4. It is further envisaged that the cover portion 21 is an integral part of the movable disc.

The instant disclosure also teaches a valve comprising at least one outlet and at least one inlet direction defining an upstream direction from the at least one outlet to the at least one inlet and a fluid path connecting the at least one inlet to the at least one outlet,
the valve also comprising at least one aforementioned valve member,
wherein the at least one valve member is arranged in the fluid path between the at least one inlet of the valve and the at least one outlet of the valve,
wherein the fixed disc 5 is arranged in the upstream direction from the movable disc 4.

The instant disclosure also teaches a valve comprising at least one inlet and at least one outlet defining a downstream direction from the at least one inlet to the at least one outlet and a fluid path connecting the at least one inlet to the at least one outlet,
the valve also comprising at least one aforementioned valve member,
wherein the at least one valve member is arranged in the fluid path between the at least one inlet of the valve and the at least one outlet of the valve,
wherein the fixed disc 5 is arranged in the downstream direction from the movable disc 4.

The instant disclosure also teaches a circuit for heating, ventilation and / or air conditioning with a valve and / or with a disc assembly according to the instant disclosure.

Any steps of a method according to the present disclosure may be embodied in hardware, in a software module executed by a processor, in a cloud computing arrangement, or in a combination thereof. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the invention and that numerous changes may be made therein without departing the scope of the disclosure as defined by the following claims. It should also be understood that the disclosure is not restricted to the illustrated embodiments and that various modifications can be made within the scope of the following claims.

### Reference numerals

1 disc assembly
2 plunger
3 degree of freedom of plunger 2
4 outer (movable) disc
5 inner (fixed) disc
6a, 6b ducts for plunger 2
7 duct protruding portion (collar)
8 trough-shaped portion for ducts 6a, 6b
9 partition plate
10 at least one gasket
11 at least one pin
12a, 12b valve conduits
13 at least one gasket
14 valve protruding portions (collars)
15 trough-shaped portion for valve conduits 12a, 12b
16 first direction of fluid flow
17 second direction of fluid flow
18 inner aperture
19 interface aperture
20 interface aperture
21 cover portion
22a, 22b further valve conduits

## Claims

1. A disc assembly for a valve member, the disc assembly comprising:
a plunger (2) and a movable disc (4) coupled to the plunger (2);
a partition plate (9) and a fixed disc (5) interposed between the partition plate (9) and the movable disc (4),
wherein the fixed disc (5) and the partition plate (9) each comprise a duct (6a, 6b), the ducts (6a, 6b) being in fluid communication and receiving the plunger (2) and at least one of the ducts (6a, 6b) having a cross-section such that the plunger (2) is configured to reciprocate along an axis determined by the cross-section and to reciprocate the movable disc (4) relative to the fixed disc (5) along the determined axis;
wherein the duct (6a) of the fixed disc (5) has an end that defines an interface aperture (20) having an outer circumference, the interface aperture (20) opening in the direction of the movable disc (4);
**characterized in that** the fixed disc (5) comprises a collar (7) protruding from the fixed disc (5) in the direction of the movable disc (4) and looping about the outer circumference of the interface aperture (20) of the duct (6a) of the fixed disc (5);
the disc assembly also comprising a trough-shaped portion (8) defined and bounded by the protruding collar (7), by the fixed disc (5) and by the movable disc (4), the trough-shaped portion (8) being in fluid communication with the duct (6a) of the fixed disc (5) via the interface aperture (20);
wherein the movable disc (4) and the protruding collar (7) each has a surface in mutual abutment with each other such that the mutually abutting surfaces of the movable disc (4) and of the protruding collar (7) form a seal about the trough-shaped portion (8);
wherein the disc assembly is configured so that when a first pressure of a fluid is applied to the movable disc (4) from inside the trough-shaped portion (8) and a second pressure of a fluid is applied to the movable disc (4) from outside the trough-shaped portion (8), the second pressure exceeding the first pressure, a force is applied to the movable disc (4) that presses the abutting surface of movable disc (4) against the abutting surface of the protruding collar (7) of the fixed disc (5).

2. The disc assembly according to claim 1, wherein the disc assembly further comprises a common duct (6a, 6b, 10),
wherein the common duct (6a, 6b, 10) comprises the duct (6a) of the fixed disc (5) and the duct (6b) of the partition plate (9) and additionally comprises a portion in between the partition plate (9) and the fixed disc (5) and a gasket (10) enveloping the portion of the common duct (6a, 6b, 10) in between the partition plate (9) and the fixed disc (5);
wherein the gasket (10) is interposed between the partition plate (9) and the fixed disc (5);
wherein the gasket (10) seals the portion of the common duct (6a, 6b, 10) in between the partition plate (9) and the fixed disc (5).

3. The disc assembly according to claim 2
wherein the plunger (2) comprises a portion enveloped by the common duct (6a, 6b, 10),
wherein the enveloped portion of the plunger (2) has an axis,
wherein at least one of the ducts (6a, 6b) has a cross-section configured to inhibit movement of the plunger (2) in a direction that is perpendicular to the determined axis and perpendicular to the axis of the enveloped portion of the plunger (2).

4. The disc assembly according to claim 3, wherein the axis of the enveloped portion of the plunger (2) is perpendicular to the abutting surface of the protruding collar (7).

5. The disc assembly according to any of the claims 3 to 4, wherein the axis of the enveloped portion of the plunger (2) is perpendicular to the abutting surface of the movable disc (4).

6. The disc assembly according to any of the claims 1 to 5,
wherein the partition plate (9) comprises at least one engaging means (11) and the fixed disc (5) comprises at least one recess,
wherein the at least one recess of the fixed disc (5) receives the at least one engaging means (11) of the partition plate (9) thereby defining the position of the fixed disc (5) relative to the partition plate (9).

7. The disc assembly according to any of the claims 1 to 6,
wherein the fixed disc (5) comprises at least one engaging means and the partition plate (9) comprises at least one recess;
wherein the at least one recess of the partition plate (9) receives the at least one engaging means (11) of the fixed disc thereby defining the position of the partition plate (9) relative to the fixed disc (5).

8. The disc assembly according to any of the claims 1 to 7,
wherein the fixed disc (5) and the partition plate (9) each comprise at least one valve conduit (12a, 12b), the at least one valve conduit (12a) of the fixed disc (5) being in fluid communication with the at least one valve conduit (12b) of the partition plate (9).

9. The disc assembly according to claim 8, the disc assembly further comprising at least one common valve conduit (12a, 12b, 13),
wherein the at least one common valve conduit (12a, 12b, 13) comprises the at least one valve conduit (12a) of the fixed disc (5) and the at least one valve conduit (12b) of the partition plate (9) and additionally comprises a portion in between the partition plate (9) and the fixed disc (5) and at least one valve gasket (13) enveloping the portion of the common valve conduit (12a, 12b, 13) in between the partition plate (9) and the fixed disc (5);
wherein the at least one valve gasket (13) is interposed between the partition plate (9) and the fixed disc (5);
wherein the at least one valve gasket (13) seals the portion of the at least one common valve conduit (12a, 12b, 13) in between the partition plate (9) and the fixed disc (5).

10. The disc assembly according to any of the claims 8 or 9,
wherein the at least one valve conduit (12a) of the fixed disc (5) has an end that defines an interface aperture (19) having an outer circumference, the interface aperture (19) of the at least one valve conduit (12a) of the fixed disc (5) opening in the direction of the movable disc (4);
wherein the fixed disc (5) comprises at least one valve collar (14) protruding from the fixed disc (5) in the direction of the movable disc (4) and looping about the outer circumference of the interface aperture (19) of the at least one conduit (12a) of the fixed disc (5).

11. The disc assembly according to claim 10, the disc assembly further comprising at least another trough-shaped portion (15) defined and bounded by the at least one protruding valve collar (14) and by the fixed disc (5), the at least another trough-shaped portion (15) being in fluid communication with the at least one valve conduit (12a) of the fixed disc (5) via the interface aperture (19) of the at least one valve conduit (12a) of the fixed disc (5).

12. A valve member comprising the disc assembly according to claim 11,
wherein the movable disc (4) additionally comprises at least one cover portion (21);
wherein the at least one cover portion (21) of the movable disc (4) and the at least one protruding valve collar (14) each has a surface in mutual abutment with each other;
wherein the plunger (2) is configured to move the movable disc (4) and the at least one cover portion (21) of the movable disc (4) to a closed position
such that in the closed position the surfaces configured for mutual abutment of the at least one cover portion (21) and of the at least one protruding valve collar (14) form a seal of the at least another trough-shaped portion (15)
thereby obturating fluid flow through the at least one common valve conduit (12a, 12b, 13).

13. A valve member comprising the disc assembly according to claim 11,
wherein the movable disc (4) additionally comprises at least one cover portion (21),
wherein the at least one cover portion (21) of the movable disc (4) and the at least one protruding valve collar (14) each has a surface in mutual abutment with each other;
wherein the plunger (2) is configured to move the movable disc (4) and the at least one cover portion (21) of the movable disc (4) in an open position
such that in the open position the at least one cover portion (21) of the movable disc (4) uncovers the at least another trough-shaped portion (15) thereby enabling fluid flow through the at least one common valve conduit (12a, 12b, 13).

14. A valve comprising at least one outlet and at least one inlet defining an upstream direction from the at least one outlet to the at least one inlet and a fluid path connecting the at least one inlet to the at least one outlet,
the valve also comprising at least one valve member according to any of the claims 12 to 13;
wherein the at least one valve member is arranged in the fluid path between the at least one inlet of the valve and the at least one outlet of the valve;
wherein the fixed disc (5) is arranged in the upstream direction from the movable disc (4).

15. A valve comprising at least one inlet and at least one outlet defining a downstream direction from the at least one inlet to the at least one outlet and a fluid path connecting the at least one inlet to the at least one outlet;
the valve also comprising at least one valve member according to any of the claims 12 to 13;
wherein the at least one valve member is arranged in the fluid path between the at least one inlet of the valve and the at least one outlet of the valve;
wherein the fixed disc (5) is arranged in the downstream direction from the movable disc (4).

## Patentansprüche

1. Scheibenanordnung für ein Ventilelement, die Folgendes umfasst:
einen Kolben (2) und eine mit dem Kolben (2) verbundene, bewegliche Scheibe (4),
eine Trennplatte (9) und eine zwischen der Trennplatte (9) und der beweglichen Scheibe (4) angeordnete, feste Scheibe (5),
wobei die feste Scheibe (5) und die Trennplatte (9) jeweils einen Kanal (6a, 6b) umfassen, die Kanäle (6a, 6b) in Fluidverbindung stehen und den Kolben (2) aufnehmen und mindestens einer der Kanäle (6a, 6b) einen derartigen Querschnitt aufweist, dass der Kolben (2) so konfiguriert ist, dass er sich an einer durch den Querschnitt festgelegten Achse entlang hin und her bewegt und die bewegliche Scheibe (4) in Bezug auf die feste Scheibe (5) an der festgelegten Achse entlang hin und her bewegt,
wobei der Kanal (6a) der festen Scheibe (5) ein Ende aufweist, das eine Grenzflächenöffnung (20) mit einem Außenumfang definiert, die in Richtung der beweglichen Scheibe (4) offen ist,
**dadurch gekennzeichnet, dass** die feste Scheibe (5) einen Ansatz (7) umfasst, der von der festen Scheibe (5) in Richtung der beweglichen Scheibe (4) vorsteht und um den Außenumfang der Grenzflächenöffnung (20) des Kanals (6a) der festen Scheibe (5) herum verläuft,
wobei die Scheibenanordnung auch einen wannenförmigen Abschnitt (8) umfasst, der von dem vorstehenden Ansatz (7), der festen Scheibe (5) und der beweglichen Scheibe (4) definiert und begrenzt wird, wobei der wannenförmige Abschnitt (8) über die Grenzflächenöffnung (20) mit dem Kanal (6a) der festen Scheibe (5) in Fluidverbindung steht,
wobei die bewegliche Scheibe (4) und der vorstehende Ansatz (7) jeweils eine Fläche aufweisen, die so aneinander anliegen, dass die aneinander anliegenden Flächen der beweglichen Scheibe (4) und des vorstehenden Ansatzes (7) um den wannenförmigen Abschnitt (8) herum eine Dichtung bilden,
wobei die Scheibenanordnung so konfiguriert ist, dass, wenn von innerhalb des wannenförmigen Abschnitts (8) her ein erster Druck eines Fluids und von außerhalb des wannenförmigen Abschnitts (8) her ein zweiter Druck eines Fluids auf die bewegliche Scheibe (4) einwirkt, wobei der zweite Druck höher ist als der erste, eine Kraft auf die bewegliche Scheibe (4) einwirkt, die die Anlagefläche der beweglichen Scheibe (4) an die Anlagefläche des vorstehenden Ansatzes (7) der festen Scheibe (5) drückt.

2. Scheibenanordnung nach Anspruch 1,
wobei die Scheibenanordnung ferner einen gemeinsamen Kanal (6a, 6b, 10) umfasst,
wobei der allgemeine Kanal (6a, 6b, 10) den Kanal (6a) der festen Scheibe (5) und den Kanal (6b) der Trennplatte (9) sowie zusätzlich einen Abschnitt zwischen der Trennplatte (9) und der festen Scheibe (5) und einem Dichtungsring (10) umfasst, der den Abschnitt des gemeinsamen Kanals (6a, 6b, 10) zwischen der Trennplatte (9) und der festen Scheibe (5) umschließt,
wobei der Dichtungsring (10) zwischen der Trennplatte (9) und der festen Scheibe (5) angeordnet ist,
wobei der Dichtungsring (10) den Abschnitt des gemeinsamen Kanals (6a, 6b, 10) zwischen der Trennplatte (9) und der festen Scheibe (5) abdichtet.

3. Scheibenanordnung nach Anspruch 2,
wobei der Kolben (2) einen von dem gemeinsamen Kanal (6a, 6b, 10) umschlossenen Abschnitt umfasst,
wobei der umschlossene Abschnitt des Kolbens (2) eine Achse aufweist,
wobei mindestens einer der Kanäle (6a, 6b) einen Querschnitt aufweist, der so konfiguriert ist, dass er eine Bewegung des Kolbens (2) in einer Richtung einschränkt, die senkrecht zu der festgelegten Achse und zur Achse des umschlossenen Abschnitts des Kolbens (2) verläuft.

4. Scheibenanordnung nach Anspruch 3,
wobei die Achse des umschlossenen Abschnitts des Kolbens (2) senkrecht zur Anlagefläche des vorstehenden Ansatzes (7) verläuft.

5. Scheibenanordnung nach einem der Ansprüche 3 und 4,
wobei die Achse des umschlossenen Abschnitts des Kolbens (2) senkrecht zur Anlagefläche der beweglichen Scheibe (4) verläuft.

6. Scheibenanordnung nach einem der Ansprüche 1 bis 5,
wobei die Trennplatte (9) mindestens ein eingreifendes Mittel (11) und die feste Scheibe (5) mindestens eine Vertiefung umfasst,
wobei die mindestens eine Vertiefung der festen Scheibe (5) das mindestens eine eingreifende Mittel (11) der Trennplatte (9) aufnimmt und dadurch die Position der festen Scheibe (5) in Bezug auf die Trennplatte (9) definiert.

7. Scheibenanordnung nach einem der Ansprüche 1 bis 6,
wobei die feste Scheibe (5) mindestens ein eingreifendes Mittel und die Trennplatte (9) mindestens eine Vertiefung umfasst,
wobei die mindestens eine Vertiefung der Trennplatte (9) das mindestens eine eingreifende Mittel (11) der festen Scheibe aufnimmt und dadurch die Position der Trennplatte (9) in Bezug auf die feste Scheibe (5) definiert.

8. Scheibenanordnung nach einem der Ansprüche 1 bis 7,
wobei die feste Scheibe (5) und die Trennplatte (9) jeweils mindestens einen Ventildurchgang (12a, 12b) umfassen, wobei der mindestens eine Ventildurchgang (12a) der festen Scheibe (5) mit dem mindestens einen Ventildurchgang (12b) der Trennplatte (9) in Fluidverbindung steht.

9. Scheibenanordnung nach Anspruch 8, die ferner mindestens einen allgemeinen Ventildurchgang (12a, 12b, 13) umfasst,
wobei der mindestens eine allgemeine Ventildurchgang (12a, 12b, 13) den mindestens einen Ventildurchgang (12a) der festen Scheibe (5) und den mindestens einen Ventildurchgang (12b) der Trennplatte (9) sowie zusätzlich einen Abschnitt zwischen der Trennplatte (9) und der festen Scheibe (5) und mindestens einem Ventildichtungsring (13) umfasst, der den Abschnitt des allgemeinen Ventildurchgangs (12a, 12b, 13) zwischen der Trennplatte (9) und der festen Scheibe (5) umschließt,
wobei der mindestens eine Ventildichtungsring (13) zwischen der Trennplatte (9) und der festen Scheibe (5) angeordnet ist,
wobei der mindestens eine Ventildichtungsring (13) den Abschnitt des mindestens einen allgemeinen Ventildurchgangs (12a, 12b, 13) zwischen der Trennplatte (9) und der festen Scheibe (5) abdichtet.

10. Scheibenanordnung nach einem der Ansprüche 8 und 9,
wobei der mindestens eine Ventildurchgang (12a) der festen Scheibe (5) ein Ende aufweist, das eine Grenzflächenöffnung (19) mit einem Außenumfang definiert, wobei sich die Grenzflächenöffnung (19) des mindestens einen Ventildurchgangs (12a) der festen Scheibe (5) in Richtung der beweglichen Scheibe (4) öffnet,
wobei die feste Scheibe (5) mindestens einen Ventilansatz (14) umfasst, der von der festen Scheibe (5) in Richtung der beweglichen Scheibe (4) vorsteht und um den Außenumfang der Grenzflächenöffnung (19) des mindestens einen Durchgangs (12a) der festen Scheibe (5) herum verläuft.

11. Scheibenanordnung nach Anspruch 10, die ferner zumindest einen weiteren wannenförmigen Abschnitt (15) umfasst, der von dem mindestens einen vorstehenden Ventilansatz (14) und der festen Scheibe (5) definiert und begrenzt wird, wobei der zumindest eine weitere wannenförmige Abschnitt (15) über die Grenzflächenöffnung (19) des mindestens einen Ventildurchgangs (12a) der festen Scheibe (5) mit dem mindestens einen Ventildurchgang (12a) der festen Scheibe (5) in Fluidverbindung steht.

12. Ventilelement mit der Scheibenanordnung nach Anspruch 11,
wobei die bewegliche Scheibe (4) zusätzlich mindestens einen Abdeckabschnitt (21) umfasst,
wobei der mindestens eine Abdeckabschnitt (21) der beweglichen Scheibe (4) und der mindestens eine vorstehende Ventilansatz (14) jeweils eine Fläche aufweisen, die aneinander anliegen,
wobei der Kolben (2) so konfiguriert ist, dass er die bewegliche Scheibe (4) und den mindestens einen Abdeckabschnitt (21) der beweglichen Scheibe (4) in eine geschlossene Position bewegt,
so dass die Flächen, die zum Aneinanderanliegen des mindestens einen Abdeckabschnitts (21) und des mindestens einen vorstehenden Ventilansatzes (14) konfiguriert sind, in der geschlossenen Position eine Dichtung für den zumindest einen weiteren wannenförmigen Abschnitt (15) bilden
und dadurch einen Fluidstrom durch den mindestens einen allgemeinen Ventildurchgang (12a, 12b, 13) unterbinden.

13. Ventilelement mit der Scheibenanordnung nach Anspruch 11,
wobei die bewegliche Scheibe (4) zusätzlich mindestens einen Abdeckabschnitt (21) umfasst,
wobei der mindestens eine Abdeckabschnitt (21) der beweglichen Scheibe (4) und der mindestens eine vorstehende Ventilansatz (14) jeweils eine Fläche aufweisen, die aneinander anliegen,
wobei der Kolben (2) so konfiguriert ist, dass er die bewegliche Scheibe (4) und den mindestens einen Abdeckabschnitt (21) der beweglichen Scheibe (4) in eine offene Position bewegt,
so dass der mindestens eine Abdeckabschnitt (21) der beweglichen Scheibe (4) in der offenen Position den zumindest einen weiteren wannenförmigen Abschnitt (15) freilegt und dadurch einen Fluidstrom durch den mindestens einen allgemeinen Ventildurchgang (12a, 12b, 13) ermöglicht.

14. Ventil mit mindestens einem Auslass und mindestens einem Einlass, die eine stromaufwärtige Richtung von dem mindestens einen Auslass zu dem mindestens einen Einlass und einen den mindestens einen Einlass mit dem mindestens einen Auslass verbindenden Fluidweg definieren,
wobei das Ventil auch mindestens ein Ventilelement nach einem der Ansprüche 12 und 13 umfasst,
wobei das mindestens eine Ventilelement im Fluidweg zwischen dem mindestens einen Einlass und dem mindestens einen Auslass des Ventils angeordnet ist,
wobei die feste Scheibe (5) von der beweglichen Scheibe (4) aus in stromaufwärtiger Richtung angeordnet ist.

15. Ventil mit mindestens einem Einlass und mindestens einem Auslass, die eine stromabwärtige Richtung von dem mindestens einen Einlass zu dem mindestens einen Auslass und einen den mindestens einen Einlass mit dem mindestens einen Auslass verbindenden Fluidweg definieren,
wobei das Ventil auch mindestens ein Ventilelement nach einem der Ansprüche 12 und 13 umfasst,
wobei das mindestens eine Ventilelement im Fluidweg zwischen dem mindestens einen Einlass und dem mindestens einen Auslass des Ventils angeordnet ist,
wobei die feste Scheibe (5) von der beweglichen Scheibe (4) aus in stromabwärtiger Richtung angeordnet ist.

## Revendications

1. Ensemble de disques pour élément de valve, l'ensemble de disques comprenant :
un piston (2) et un disque mobile (4) couplé au piston (2) ; une plaque de séparation (9) et un disque fixe (5) interposé entre la plaque de séparation (9) et le disque mobile (4),
dans lequel le disque fixe (5) et la plaque de séparation (9) comprennent chacun un passage (6a, 6b), les passages (6a, 6b) étant en communication fluide et recevant le piston (2) et au moins un des passages (6a, 6b) ayant une section transversale telle que le piston (2) est configuré pour effectuer un mouvement de va-et-vient le long d'un axe déterminé par la section transversale et pour faire aller et venir le disque mobile (4) par rapport au disque fixe (5) le long de l'axe déterminé ;
dans lequel le passage (6a) du disque fixe (5) présente une extrémité qui définit une ouverture d'interface (20) présentant une circonférence externe, l'ouverture d'interface (20) s'ouvrant dans la direction du disque mobile (4) ;
**caractérisé en ce que**
le disque fixe (5) comporte une collerette (7) qui fait saillie depuis le disque fixe (5) dans la direction du disque mobile (4) et qui forme une boucle autour de la circonférence externe de l'ouverture d'interface (20) du passage (6a) du disque fixe (5) ;
l'ensemble de disques comprend également une partie en auge (8) définie et limitée par la collerette saillante (7), par le disque fixe (5) et par le disque mobile (4), la partie en auge (8) étant en communication fluide avec le passage (6a) du disque fixe (5) par l'intermédiaire de l'ouverture d'interface (20) ;
dans lequel le disque mobile (4) et la collerette saillante (7) possèdent chacun une surface en butée réciproque l'une avec l'autre de sorte que les surfaces en butée mutuelle du disque mobile (4) et de la collerette saillante (7) forment un joint étanche autour de la partie en auge (8) ;
dans lequel l'ensemble de disques est configuré de façon que, lorsqu'une première pression d'un fluide est appliquée au disque mobile (4) depuis l'intérieur de la partie en auge (8) et qu'une seconde pression d'un fluide est appliquée au disque mobile (4) depuis l'extérieur de la partie en auge (8), la seconde pression étant supérieure à la première pression, une force soit appliquée au disque mobile (4), laquelle force presse la surface de butée du disque mobile (4) contre la surface de butée de la collerette saillante (7) du disque fixe (5).

2. Ensemble de disques selon la revendication 1, dans lequel l'ensemble de disques comprend, en outre, un passage commun (6a, 6b, 10),
dans lequel le passage commun (6a, 6b, 10) comprend le passage (6a) du disque fixe (5) et le passage (6b) de la plaque de séparation (9) et comprend, en plus, une partie située entre la plaque de séparation (9) et le disque fixe (5) et un joint d'étanchéité (10) entourant la partie du passage commun (6a, 6b, 10) entre la plaque de séparation (9) et le disque fixe (5) ;
dans lequel le joint d'étanchéité (10) est intercalé entre la plaque de séparation (9) et le disque fixe (5) ;
dans lequel le joint d'étanchéité (10) rend étanche la partie du passage commun (6a, 6b, 10) entre la plaque de séparation (9) et le disque fixe (5).

3. Ensemble de disques selon la revendication 2,
dans lequel le piston (2) comprend une partie entourée par le passage commun (6a, 6b, 10),
dans lequel la partie entourée du piston (2) a un axe, dans lequel au moins un des passages (6a, 6b) a une section transversale configurée pour empêcher un mouvement du piston (2) dans une direction qui est perpendiculaire à l'axe déterminé et perpendiculaire à l'axe de la partie entourée du piston (2).

4. Ensemble de disques selon la revendication 3, dans lequel l'axe de la partie entourée du piston (2) est perpendiculaire à la surface de butée de la collerette saillante (7).

5. Ensemble de disques selon l'une quelconque des revendications 3 à 4, dans lequel l'axe de la partie entourée du piston (2) est perpendiculaire à la surface de butée du disque mobile (4).

6. Ensemble de disques selon l'une quelconque des revendications 1 à 5,
dans lequel la plaque de séparation (9) comprend au moins un moyen de mise en prise (11) et le disque fixe (5) comprend au moins un creux,
dans lequel l'au moins un creux du disque fixe (5) reçoit l'au moins un moyen de mise en prise (11) de la plaque de séparation (9), définissant ainsi la position du disque fixe (5) par rapport à la plaque de séparation (9).

7. Ensemble de disques selon l'une quelconque des revendications 1 à 6,
dans lequel le disque fixe (5) comprend au moins un moyen de mise en prise et la plaque de séparation (9) comprend au moins un creux ;
dans lequel l'au moins un creux de la plaque de séparation (9) reçoit l'au moins un moyen de mise en prise (11) du disque fixe, définissant ainsi la position de la plaque de séparation (9) par rapport au disque fixe (5).

8. Ensemble de disques selon l'une quelconque des revendications 1 à 7,
dans lequel le disque fixe (5) et la plaque de séparation (9) comprennent chacun au moins un conduit de valve (12a, 12b), l'au moins un conduit de valve (12a) du disque fixe (5) étant en communication fluide avec l'au moins un conduit de valve (12b) de la plaque de séparation (9).

9. Ensemble de disques selon la revendication 8, l'ensemble de disques comprenant, en outre, au moins un conduit de valve commun (12a, 12b, 13),
dans lequel l'au moins un conduit de valve commun (12a, 12b, 13) comprend l'au moins un conduit de valve (12a) du disque fixe (5) et l'au moins un conduit de valve (12b) de la plaque de séparation (9) et comprend, en plus, une partie située entre la plaque de séparation (9) et le disque fixe (5) et au moins un joint d'étanchéité de valve (13) entourant la partie du conduit de valve commun (12a, 12b, 13) entre la plaque de séparation (9) et le disque fixe (5) ;
dans lequel l'au moins un joint d'étanchéité de valve (13) est intercalé entre la plaque de séparation (9) et le disque fixe (5) ;
dans lequel au moins un joint d'étanchéité de valve (13) rend étanche la partie de l'au moins un conduit de valve commun (12a, 12b, 13) entre la plaque de séparation (9) et le disque fixe (5).

10. Ensemble de disques selon l'une quelconque des revendications 8 ou 9,
dans lequel l'au moins un conduit de valve (12a) du disque fixe (5) présente une extrémité qui définit une ouverture d'interface (19) ayant une circonférence externe,
l'ouverture d'interface (19) de l'au moins un conduit de valve (12a) du disque fixe (5) s'ouvrant dans la direction du disque mobile (4) ;
dans lequel le disque fixe (5) comporte au moins une collerette de valve (14) qui fait saillie depuis le disque fixe (5) dans la direction du disque mobile (4) et forme une boucle autour de la circonférence externe de l'ouverture d'interface (19) de l'au moins un conduit (12a) du disque fixe (5).

11. Ensemble de disques selon la revendication 10, l'ensemble de disques comprenant, en outre, au moins une autre partie en auge (15) définie et limitée par l'au moins une collerette de valve saillante (14) et par le disque fixe (5), l'au moins une autre partie en auge (15) étant en communication fluide avec l'au moins un conduit de valve (12a) du disque fixe (5) par l'intermédiaire de l'ouverture d'interface (19) de l'au moins un conduit de valve (12a) du disque fixe (5).

12. Élément de valve comprenant l'ensemble de disques selon la revendication 11,
dans lequel le disque mobile (4) comprend, en plus, au moins une partie de recouvrement (21) ;
dans lequel l'au moins une partie de recouvrement (21) du disque mobile (4) et l'au moins une collerette de valve saillante (14) possèdent chacune une surface en butée réciproque l'une avec l'autre ;
dans lequel le piston (2) est configuré pour déplacer le disque mobile (4) et l'au moins une partie de recouvrement (21) du disque mobile (4) vers une position fermée,
de façon que, dans la position fermée, les surfaces configurées pour être mutuellement en butée de l'au moins une partie de recouvrement (21) et de l'au moins une collerette de valve saillante (14) forment un joint étanche de l'au moins une autre partie en auge (15), obturant ainsi un écoulement de fluide à travers l'au moins un conduit de valve commun (12a, 12b, 13).

13. Élément de valve comprenant l'ensemble de disques selon la revendication 11,
dans lequel le disque mobile (4) comprend, en plus, au moins une partie de recouvrement (21),
dans lequel l'au moins une partie de recouvrement (21) du disque mobile (4) et l'au moins une collerette de valve saillante (14) possèdent chacune une surface en butée réciproque l'une avec l'autre ;
dans lequel le piston (2) est configuré pour déplacer le disque mobile (4) et l'au moins une partie de recouvrement (21) du disque mobile (4) dans une position ouverte, de sorte que, dans la position ouverte, l'au moins une partie de recouvrement (21) du disque mobile (4) découvre l'au moins une autre partie en auge (15), permettant ainsi un écoulement de fluide à travers l'au moins un conduit de valve commun (12a, 12b, 13).

14. Valve comprenant au moins une sortie et au moins une entrée définissant une direction d'amont de l'au moins une sortie vers l'au moins une entrée et un trajet de fluide qui relie l'au moins une entrée à l'au moins une sortie,
la valve comprenant également au moins un élément de valve selon l'une quelconque des revendications 12 à 13 ;
dans laquelle l'au moins un élément de valve est disposé dans le trajet de fluide entre l'au moins une entrée de la valve et l'au moins une sortie de la valve ;
dans laquelle le disque fixe (5) est agencé dans la direction d'amont par rapport au disque mobile (4).

15. Valve comprenant au moins une entrée et au moins une sortie définissant une direction d'aval de l'au moins une entrée vers l'au moins une sortie et un trajet de fluide qui relie l'au moins une entrée à l'au moins une sortie ;
la valve comprenant également au moins un élément de valve selon l'une quelconque des revendications 12 à 13 ;
dans laquelle l'au moins un élément de valve est disposé dans le trajet de fluide entre l'au moins une entrée de la valve et l'au moins une sortie de la valve ;
dans laquelle le disque fixe (5) est agencé dans la direction d'aval par rapport au disque mobile (4).
